# EUROPÄISCHE PATENTSCHRIFT

(11) **EP 1 249 407 B1**
(45) Veröffentlichungstag und Bekanntmachung des Hinweises auf die Patenterteilung: **29.09.2004**
(21) Anmeldenummer: 02008086.7
(22) Anmeldetag: 11.04.2002
(51) Int. Cl.: B65G 21/22

(54) **Stetigförderer zur Förderung eines Fördergutes**
Continuous conveyor for moving a load
Convoyeur en continu pour déplacer une charge

(30) Priorität: 14.04.2001 DE 10118564
(43) Veröffentlichungstag der Anmeldung: 16.10.2002
(73) Patentinhaber: ROBERT BOSCH GMBH, 70442 Stuttgart (DE)
(72) Erfinder: Baier, Wolfram, 73760 Ostfildern (DE); Hettwer, Guido, 70469 Stuttgart (DE); Rothfuss, Peter, 71254 Ditzingen (DE); Klemd, Olaf, 71706 Markgroeningen (DE)

(56) Entgegenhaltungen:
- EP-A- 1 024 097
- DE-A- 3 104 262
- DE-A- 3 213 986
- DE-A- 19 817 125
- DE-A- 19 931 365
- US-A- 3 265 192
- US-A- 5 404 997

## Beschreibung

### Stand der Technik

Die vorliegende Erfindung betrifft einen Stetigförderer zur Förderung eines Fördergutes gemäß dem Oberbegriff des Patentanspruchs 1. Insbesondere betrifft die vorliegende Erfindung einen Kettenförderer oder einen Bandförderer.

Stetigförderer sind in vielgestaltigen Ausführungsformen bekannt. Beispielsweise zeigen die DE 31 04 262 A1 und die DE 32 13 986 C2 einen Kettenförderer, welcher eine in einem Tragprofil angeordnete Förderkette aufweist. An der Förderkette sind eine Vielzahl von Förderplatten angeordnet, welche außerhalb des Tragprofils laufen. Um eine Reibung zwischen den Platten und dem Tragprofil zu minimieren, sind am oberen Bereich des Tragprofils U-förmige Gleitschienen angeordnet. Wenn der Förderer in verschmutzten Bereichen wie beispielsweise in Produktionsbereichen von Betrieben eingesetzt wird, können dabei insbesondere Späne oder Schmutz zwischen die Förderkette und die Gleitbereiche bzw. zwischen die Förderkette und das Tragprofil gelangen und somit zu einer erhöhten Reibung bzw. Abnutzung der Bauteile und im Extremfall zu einem Blockieren des Förderers führen können.

Aus der US 5 404 997 ist eine Transportvorrichtung mit einer Transportkette bekannt, die sich über Rollen auf einer U-förmigen Führungsschiene abstützt. Die Führungsschiene verfügt über mehrere Vorsprünge, die in Aussparungen des Tragprofils eingreifen. Da sich beidseitig zwischen Transportkette und Führungsschiene ein Spalt befindet, kann es auch hier zu einem unerwünschten Schmutzpartikeleintritt kommen.

Bei dem gemäß EP 1 024 097 A2 bekannten Kettenförderer bewegt sich eine Kette über Laufrollen auf zwei in einem Tragelement aufgenommenen Fahrschienen.

Aus der DE 198 17 125 A1, worauf der Oberbegriff des Anspruchs 1 basiert, ist eine Transportkette bekannt, die sich auf einem Tragprofil abstützt. Um die Reibung zwischen Kette und Profil zu verringern, ist Letzteres mit Gleitschienen ausgestattet.

### Vorteile der Erfindung

Der erfindungsgemäße Stetigförderer mit den Merkmalen des Patentanspruchs 1 hat den Vorteil, dass die Führungsschiene einem unteren Bereich eines Zugmittels führt. Dadurch ist ein Schutz gegenüber Schmutz oder Spänen gegeben, so dass verhindert werden kann, dass Späne o.ä. zwischen das Zugmittel und die Führungsschiene gelangen können. Damit kann der erfindungsgemäße Stetigförderer insbesondere in verschmutzten Umgebungen eingesetzt werden.

Der erfindungsgemäße Stetigförderer weist zwei L-förmige Führungsschienen auf, um das Zugmittel an beiden Seiten zu führen und um insbesondere auch eine seitliche Führung sowohl in Links- als auch in Rechtskurven zu ermöglichen.

Gemäß einem bevorzugten Ausführungsbeispiel der vorliegenden Erfindung ist die Führungsschiene zwischen Stegen angeordnet, wobei die Stege am Tragprofil des Stetigförderers ausgebildet sind. Dies ermöglicht eine einfache Befestigung der Führungsschienen. Besonders bevorzugt ist dabei zwischen den Stegen und der Führungsschiene eine Presspassung ausgebildet. Dadurch werden einfache Montage- bzw. Demontagevorgänge realisierbar, so dass die Montagezeiten gering gehalten werden können.

Die vorliegende Erfindung kann besonders vorteilhaft bei einem Stetigförderer verwendet werden, welcher als Zugmittel eine Kette verwendet. Hierbei können auch kurvige Förderstrecken mit unterschiedlichsten Radien realisiert werden.

Gemäß einer weiteren bevorzugten Ausgestaltung der vorliegenden Erfindung ist das Zugmittel sowohl an seinem unteren Bereich als auch an seinem oberen Bereich geführt. Besonders bevorzugt sind dabei am oberen Bereich des Tragprofils horizontal ausgerichtete Fortsätze ausgebildet, an welchen die zusätzlichen oberen Führungschienen befestigt sind.

Um Kostenvorteile bei der Produktion zu ermöglichen, sind vorzugsweise alle im Stetigförderer verwendeten Führungsschienen gleich ausgebildet. Mit anderen Worten weisen alle Führungsschienen des Stetigförderers das gleiche Profil auf.

Besonders bevorzugt sind die Führungsschienen aus Kunststoff hergestellt. Der Kunststoff sollte dabei einen möglichst geringen Reibungskoeffizienten aufweisen, so dass eine Reibung zwischen der Führungsschiene und dem Zugmittel minimiert ist. Das Tragprofil ist vorzugsweise aus Aluminium hergestellt.

### Zeichnung

Ein Ausführungsbeispiel der Erfindung ist in der Zeichnung dargestellt und wird in der nachfolgenden Beschreibung näher erläutert.

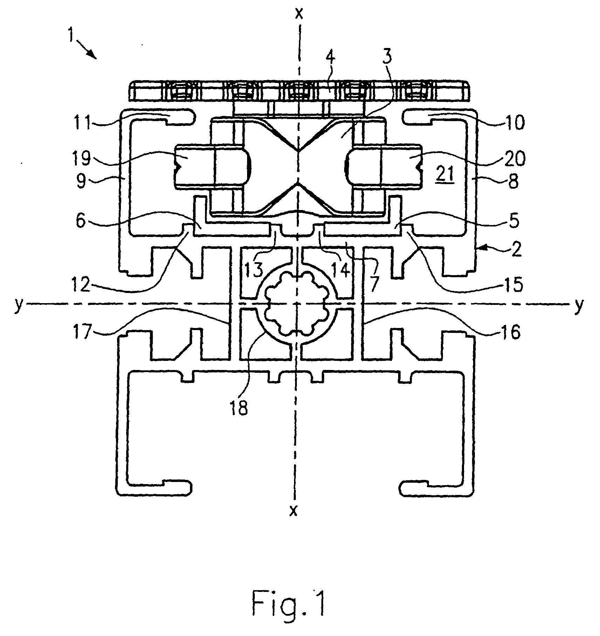

- Figur 1: zeigt eine schematische Schnittansicht eines Kettenförderers mit einer Führungsschiene gemäß der vorliegenden Erfindung.

### Beschreibung des Ausführungsbeispiels

In Figur 1 ist ein als Kettenförderer ausgebildeter Stetigförderer 1 mit einer erfindungsgemäßen Führungseinrichtung dargestellt.

Wie in Figur 1 gezeigt, umfasst der Kettenförderer 1 ein Tragprofil 2, welches symmetrisch zu einer Mittelachse X-X ausgebildet ist. Das Tragprofil 2 weist dabei einen Kernbereich 18 auf, an welchem an zwei gegenüber liegenden Seiten jeweils ein Bodenbereich 7 angeordnet ist. Senkrecht zu den Bodenbereichen sind jeweils Wandbereiche 8, 9 vorgesehen. An den Wandbereichen 8, 9 sind jeweils senkrecht dazu ausgebildete Fortsätze 10 und 11 ausgebildet (vgl. Figur 1). Dadurch wird ein Innenbereich 21 am Tragprofil 2 ausgebildet. Wie in Figur 1 gezeigt, ist das Tragprofil auch zu einer Achse Y-Y symmetrisch ausgebildet, wobei in Figur 1 zur besseren Übersichtlichkeit nur eine Hälfte des Tragprofils mit Bezugszeichen bezeichnet ist.

Weiter umfasst der Kettenförderer 1 ein Zugmittel 3 in Form einer Kette. Am Zugmittel 3 sind eine Vielzahl von plattenförmigen Transportelementen 4 angeordnet, auf welchen das zu fördernde Fördergut positioniert wird.

Weiterhin sind im Innenbereich 21 des Tragprofils 2 zwei Führungsschienen 5 und 6 angeordnet. Die Führungsschienen 5 und 6 sind im Wesentlichen L-förmig und sind am Bodenbereich 7 des Tragprofils 2 befestigt. Zur Befestigung der Führungsschienen 5, 6 sind am Bodenbereich 7 vier Stege 12, 13, 14 und 15 ausgebildet. Die Führungsschienen 5 und 6 sind dabei jeweils zwischen zwei Stegen mittels einer Presspassung befestigt.

Wie in Figur 1 gezeigt, sind die Führungsschienen 5 und 6 im montierten Zustand derart angeordnet, dass ein Bereich der Führungsschienen senkrecht zum Bodenbereich 7 vorsteht. Hierbei ist zwischen diesen beiden senkrechten Bereichen der Führungsschienen 5 und 6 der untere Bereich der Kette 3 angeordnet. Dadurch wird die Kette 3 in ihrem unteren Bereich seitlich geführt und kann auf den Führungsschienen 5, 6 aufliegen. Dies ermöglicht eine sehr gute Kurvengängigkeit des erfindungsgemäßen Stetigförderers. Weiterhin kann die Kette 3 auf dem anderen Schenkel der Führungsschienen 5 und 6 gleiten. Darüber hinaus verhindert der senkrecht zum unteren Bodenbereich 7 angeordnete Schenkel der Führungsschienen 5 und 6, dass Schmutz oder Späne zwischen die Führungsschienen und die Kette 3 gelangen können. Die an der Kette 3 weiterhin vorgesehenen seitlich vorstehenden Bereiche 19 und 20 verhindern zusätzlich, dass beispielsweise von oben herunterfallende Späne sich zwischen die Kette 3 und die Führungsschienen 5 und 6 anordnen können. Dadurch weist der erfindungsgemäße Stetigförderer eine sehr hohe Betriebssicherheit auf und kann insbesondere auch in verschmutzten Bereichen wie beispielsweise Hallen von Produktionsbetrieben usw. eingesetzt werden.

Wie in Figur 1 gezeigt, sind am Tragprofil 2 weiterhin zwei Nuten 16 und 17 vorgesehen, welche den Anbau von Zusatzeinrichtungen an dem Tragprofil 2 des Stetigförderers 1 ermöglichen. Beispielsweise kann dabei eine Seitenführung für die zu transportierenden Gegenstände befestigt werden. Einzelne Tragprofile 2 werden untereinander vorzugsweise am Kernbereich 18 miteinander verbunden. Das Tragprofil 2 ist dabei vorzugsweise aus Aluminium hergestellt.

Somit betrifft die vorliegenden Erfindung einen Stetigförderer 1 zur Förderung von Fördergütern umfassend ein Tragprofil 2, ein Zugmittel 3 und ein plattenförmiges Transportelement 4. Das plattenförmige Transportelement 4 ist mit dem Zugmittel 3 verbunden. Das Zugmittel 3 verläuft dabei in einem Innenbereich 21 des Tragprofils 2. Weiterhin umfasst der Stetigförderer 1 mindestens eine Führungsschiene 5, 6 zur Führung des Zugmittels, wobei die Führungsschiene im Innenbereich des Tragprofils 2 angeordnet ist und einen unteren Bereich des Zugmittels 3 führt.

Die vorhergehende Beschreibung des Ausführungsbeispiels gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Stetigförderer zur Förderung eines Fördergutes umfassend ein Tragprofil (2), ein Zugmittel (3), ein mit dem Zugmittel (3) verbundenes plattenförmiges Transportelement (4) und mindestens eine Führungsschiene (5, 6) zur Führung des Zugmittels (3),
wobei das Tragprofil (2) derart ausgebildet ist, dass das Zugmittel (3) in einem Innenbereich (21) des Tragprofils (2) verläuft, dass die Führungsschiene (5, 6) im Innenbereich (21) des Tragprofils (2) angeordnet ist wobei die Führungsschiene (5,6) L-förmig ausgebildet ist, um das Zugmittel (3) seitlich zu führen, dass zwei Führungsschienen (5, 6) im Innenbereich (21) des Tragprofils (2) angeordnet sind und dass als Zugmittel (3) eine Kette verwendet wird **dadurch gekennzeichnet, dass** die Führungsschiene (5, 6) einen unteren Bereich des Zugmittels (3) führt.

2. Stetigförderer nach Anspruch 1, **dadurch gekennzeichnet, dass** die Führungsschiene (5, 6) zwischen Stegen (12, 13, 14, 15) angeordnet ist, welche am Tragprofil (2) gebildet sind.

3. Stetigförderer nach Anspruch 2, **dadurch gekennzeichnet, dass** zwischen den Stegen (12, 13, 14, 15) und der Führungsschiene (5, 6) eine Presspassung ausgebildet ist.

4. Stetigförderer nach einem der Ansprüche 1 bis 3,**dadurch gekennzeichnet, dass** zusätzliche Führungsschienen an Fortsätzen (10, 11) des Tragprofils (2) angeordnet sind.

5. Stetigförderer nach einem der Ansprüche 1 bis **4,dadurch gekennzeichnet, dass** die Führungsschienen (5, 6) des Stetigförderers das gleiche Profil aufweisen.

6. Stetigförderer nach einem der Ansprüche 1 bis **5,dadurch gekennzeichnet, dass** die Führungsschiene (5, 6) aus Kunststoff hergestellt ist.

7. Stetigförderer nach einem der Ansprüche 1 bis 6,**dadurch gekennzeichnet, dass** das Tragprofil (2) aus Aluminium hergestellt ist.

## Claims

1. Continuous conveyor for conveying conveyable material, comprising a carrying profile (2), a pulling means (3), a plate-like transporting element (4), which is connected to the pulling means (3), and at least one guide rail (5, 6) for guiding the pulling means (3), the carrying profile (2) being designed such that the pulling means (3) runs in an inner region (21) of the carrying profile (2) and that the guide rail (5, 6) is arranged in the inner region (21) of the carrying profile (2), it being the case that the guide rail (5, 6) is of L-shaped design, in order to guide the pulling means (3) laterally, that two guide rails (5, 6) are arranged in the inner region (21) of the carrying profile (2), and that a chain is used as the pulling means (3), **characterized in that** the guide rail (5, 6) guides a bottom region of the pulling means (3).

2. Continuous conveyor according to Claim 1, **characterized in that** the guide rail (5, 6) is arranged between crosspieces (12, 13, 14, 15) which are formed on the carrying profile (2).

3. Continuous conveyor according to Claim 2, **characterized in that** a press fit is formed between the crosspieces (12, 13, 14, 15) and the guide rail (5, 6).

4. Continuous conveyor according to one of Claims 1 to 3, **characterized in that** additional guide rails are arranged on extensions (10, 11) of the carrying profile (2).

5. Continuous conveyor according to one of Claims 1 to 4, **characterized in that** the guide rails (5, 6) of the continuous conveyor have the same profile.

6. Continuous conveyor according to one of Claims 1 to 5, **characterized in that** the guide rail (5, 6) is produced from plastic.

7. Continuous conveyor according to one of Claims 1 to 6, **characterized in that** the carrying profile (2) is produced from aluminium.

## Revendications

1. Convoyeur en continu pour le transport d'une charge, comprenant un profil de support (2), un moyen de traction (3), un élément de transport (4) en forme de plaque relié au moyen de traction (3) et au moins un rail de guidage (5, 6) pour guider le moyen de traction (3), le profil de support (2) étant configuré de telle sorte que le moyen de traction (3) passe dans une zone intérieure (21) du profil de support (2), le rail de guidage (5, 6) disposé dans la zone intérieure (21) du profil de support (2), étant configuré en forme de L afin de guider latéralement le moyen de traction (3), avec deux rails de guidage (5, 6) disposés dans la zone intérieure (21) du profil de support (2) et une chaîne utilisée en tant que moyen de traction (3),
**caractérisé en ce que**
le rail de guidage (5, 6) guide une zone inférieure du moyen de traction (3).

2. Convoyeur en continu selon la revendication 1,
**caractérisé en ce que**
le rail de guidage (5, 6) est disposé entre des traverses (12, 13, 14, 15) configurées au niveau du profil de support (2).

3. Convoyeur en continu selon la revendication 2,
**caractérisé en ce qu'**
un ajustement avec serrage est configuré entre les traverses (12, 13, 14, 15) et le rail de guidage (5, 6).

4. Convoyeur en continu selon l'une des revendications 1 à 3,
**caractérisé en ce que**
des rails de guidage supplémentaires sont disposés au niveau de prolongements (10, 11) du profil de support (2).

5. Convoyeur en continu selon l'une des revendications 1 à 4,
**caractérisé en ce que**
les rails de guidage (5, 6) du convoyeur en continu présentent le même profil.

6. Convoyeur en continu selon l'une des revendications 1 à 5,
**caractérisé en ce que**
le rail de guidage (5, 6) est fabriqué en matière plastique.

7. Convoyeur en continu selon l'une des revendications 1 à 6,
**caractérisé en ce que**
le profil de support (2) est fabriqué en aluminium.
